# EUROPEAN PATENT SPECIFICATION

(11) **EP 4 009 763 B1**
(45) Date of publication and mention of the grant of the patent: **21.10.2026**
(21) Application number: 20849851.9
(22) Date of filing: 30.07.2020
(51) Int. Cl.: A01D 27/00

(54) **TRACTOR-ASSISTED MULTI-ROW HARVESTER FOR ROOT VEGETABLES**
TRAKTORGESTÜTZTE MEHRREIHIGE ERNTEMASCHINE FÜR WURZELGEMÜSE
MOISSONNEUSE MULTI-RANGÉE ASSISTÉE PAR TRACTEUR POUR LÉGUMES-RACINES

(30) Priority: 07.08.2019 US 201962883920 P
(43) Date of publication of application: 15.06.2022
(73) Proprietor: Univerco (1978) Inc., Napierville, Québec J0J 1LO (CA)
(72) Inventor: BISAILLON, Carl, Québec J0J 1L0 (CA); L'HEUREUX, Serge, Québec J0J 1L0 (CA)
(74) Representative: Ipsilon
(86) International application number: PCT/CA2020/000096
(87) International publication number: WO 2021/022356

(56) References cited:
- EP-B1- 0 803 178
- BR-A2- 102017 012 162
- CN-A- 1 435 079
- CN-A- 109 479 490
- CN-A- 109 479 490
- CN-A- 109 906 746
- GB-A- 2 028 626
- KR-A- 20070 025 409
- US-A- 4 173 257
- US-B2- 10 271 475

## Description

### FIELD

The present invention generally relates to harvesters and more specifically to a tractor-assisted multi-row harvester for carrots o r the likes.

### BACKGROUND

Harvesters for root vegetables such as carrots are well-known in the art. They include one or more pairs of lifting shares and pickers, both tools working together in each pair to consecutively harvest root vegetables in a row. More specifically, the picker grabs each vegetable by its green top and the lifting share get the vegetable out of the ground.

Harvesters for root vegetables are either self-propelled or tractor-assisted, wherein the self-propelled are more costly but allows multi-row harvesting. As such, they are commonly used for large scale harvesting.

Chinese Patent Application Publication No. CN 109479490A, published on March 19, 2019, and naming Wang et al. as inventors describes an example of a self-propelled carrot harvester, which includes a frame mounted on endless tracks, a motor to propel the tracks, a single picker and an associated lifting share, both secure to the frame. Such harvesters are said to be self-propelled as they include their own motor and endless-tracks or wheels.

To the contrary, tractor-assisted harvesters are more compact, but are designed to be pulled by a conventional tractor. As such, they are less expensive.

A drawback of current tractor-assisted harvesters for root vegetables is that they are limited to being single-row. Indeed, by its function, the lifting share creates friction on the ground, which causes the tractor to be pulled sideway when there is more than one lifting share, causing the harvester to quit its row.

While it is usually profitable to buy and use a self-propelled harvester for root vegetables in the case of a plurality rows of vegetables, there is a need for a tractor-assisted multi-row harvester for root vegetables for a low number of rows.

### SUMMARY

The problem of pressure on the lifting share of tractor-assisted harvester for root-vegetable, which limit to one the number of harvested row, is solved by providing a traction assembly that is registered with the lifting shares and which compensate for the pressure thereon.

According to an illustrative embodiment, there is provided a tractor-assisted multi-row harvester (10) for root vegetables according to claim 1.

It should be understood at the outset that, although exemplary embodiments are illustrated in the figures and described below, the principles of the present disclosure may be implemented using any number of techniques, whether currently known or not. The present disclosure should in no way be limited to the exemplary implementations and techniques illustrated in the drawings and described below.

Unless otherwise specifically noted, articles depicted in the drawings are not necessarily drawn to scale

### BRIEF DESCRIPTION OF THE DRAWINGS

In the appended drawings:
Figure 1 is a first side front perspective of a tractor-assisted two-row harvester for root vegetables according to an illustrative embodiment; the harvester being shown in a carrot field;
Figure 2 is a second side front perspective of the harvester from Figure 1;
Figure 3 is a side elevation of the harvester from Figure 1; the harvester being shown attached behind a conventional tractor and
Figure 4 is a top plan view of the harvester from Figure 1.

### DETAILED DESCRIPTION

In the following description, similar features in the drawings have been given similar reference numerals, and in order not to weigh down the figures, some elements are not referred to in some figures if they were already identified in a precedent figure. Herein, it shall further be noted that, for avoiding unnecessary details obscuring the invention, only device structures and/or processing steps closely relevant to schemes according to the invention are shown in the accompanying drawings while omitting other details less relevant to the invention.

The use of the word "a" or "an" when used in conjunction with the term "comprising" in the claims and/or the specification may mean "one", but it is also consistent with the meaning of "one or more", "at least one", and "one or more than one". Similarly, the word "another" may mean at least a second or more.

As used in this specification and claim(s), the words "comprising" (and any form of comprising, such as "comprise" and "comprises"), "having" (and any form of having, such as "have" and "has"), "including" (and any form of including, such as "include" and "includes") or "containing" (and any form of containing, such as "contain" and "contains"), are inclusive or openended and do not exclude additional, un-recited elements.

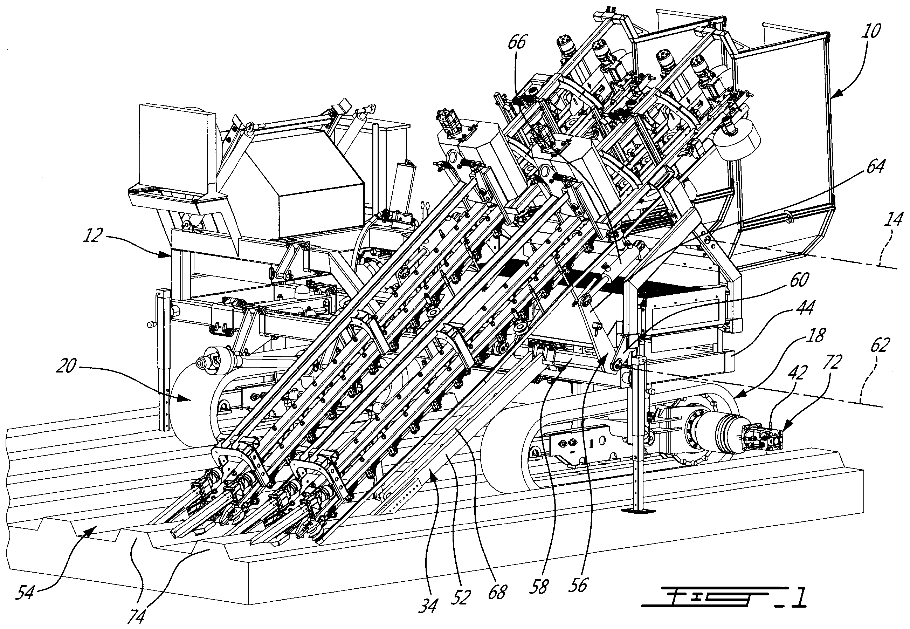

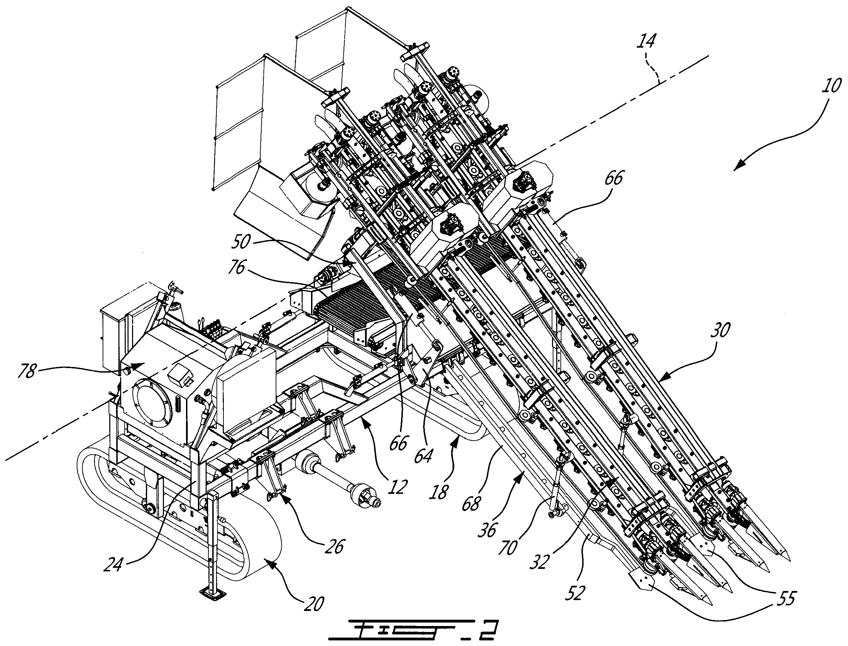

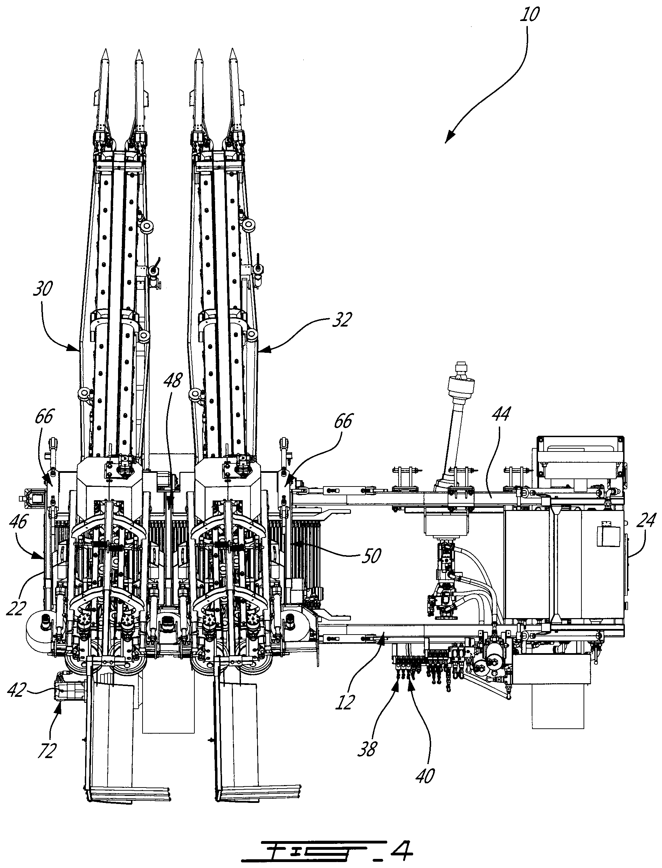

An illustrated embodiment of a tractor-assisted two-row harvester for carrots 10 will now be described with reference to Figures 1 to 4.

The two-row harvester 10 comprises:
- a frame 12 that defines a first axis 14 along its width and a second axis 16 along its height, that is perpendicular to the first axis 14;
- first and second parallel traction assemblies in the form of endless track assemblies 18-20 that are mounted to the frame 12 thereunder so as to be both operatively oriented perpendicular to both the first and second axes 14 and 16; the first and second track assemblies 18-20 being registered with respectively first and second positions along the first axis 14 near first and second lateral sides 22 and 24 of the frame 12 respectively; the first track 18 being motorized;
- a three-point hitch mounting assembly 26 secured to the frame 12 for operatively attaching the two-row harvester 10 to a conventional tractor 28;
- first and second generally parallel pickers 30 and 32 that are pivotally mounted to the frame 12 on a first lateral side of the three-point hitch mounting assembly 26 along the first axis 14 so that each is on a respective lateral side of the first track 18 at a substantially same lateral distance therefrom; the first and second pickers 30 and 32 being slanted relative to the second axis 16;
- first and second lifting shares 34 and 36 mounted to the frame 12, each under and behind a respective one of the first and second pickers 30 and 32 for solidary pivotal movement therewith;
- first and second sensors 38 and 40 mounted to the frame 12 and coupled to a respective one of the lifting shares 34 and 36 to generate respective first and second signals indicative of a change of pressure thereon; and
- a third sensor 42 on the first track 18 to determine a change of pressure thereon and to generate a third signal indicative of the change of traction force; the first track 18 being energized according to the first and second signals so as to match the pressures on the lifting shares 34 and 36.

It is to be noted that the expression 'operatively oriented' is to be construed in the description and in the claims to refer to the orientation of the resulting traction force.

Each of these components of the harvester 10 will now be described in more detail.

It is to be noted that many conventional components of a harvester, which are of less interests to the present disclosure, are not shown in the drawings to alleviate the views or are shown and will not be described herein for concision purposes.

The frame 12 includes a rectangular base 44 that is mounted to the first and second parallel track assemblies 18-20 so as to be supported therefrom. The frame 12 further includes three parallel side mounting structures 46, 48 and 50 that extends generally perpendicular from the base 44 on a same lateral side thereof and parallel to the axis 16. The mounting structures 46-50 are shaped so as to define a pentagon with the base 44.

The three mounting structures 46-50 are distanced to define two positions therebetween for receiving the first and second pickers 30-32 is a parallel relationship. Since carrot and other root vegetable pickers are believed to be well-known in the art, the pickers 30-32 will not be described herein in more detail for concision purposes.

The pickers 30-32 and the lifting shares 34-36 are mounted to the frame 12 on a first lateral side thereof and the three-point hitch mounting assembly 26 is secured to the frame 12 on the other lateral side. The pickers 30-32, lifting shares 34-36 and the three-point hitch assembly 26 all extends on a same side of the frame 12 which defines the front of the harvester 10.

The three-point hitch mounting assembly 26 allows operatively attaching the two-row harvester 10 to a conventional tractor 28. This feature reduces the size and cost of the harvester 10 compared to conventional multi-row harvesters (not shown) which requires an integrated tractor.

Since three-point hitches are believed to be well-known in the art, they will not be described herein in more detail for concision purposes.

The lifting shares 34 and 36 are both in the form of a bar 52, having a plow 55 mounted at its distal end.

Both lifting shares 34-36 are mounted to the base 44 of the frame 12 for pivotal movements via a mounting assembly 56 that allows setting the penetration depth of the lifting shares 34-36 into the soil 54.

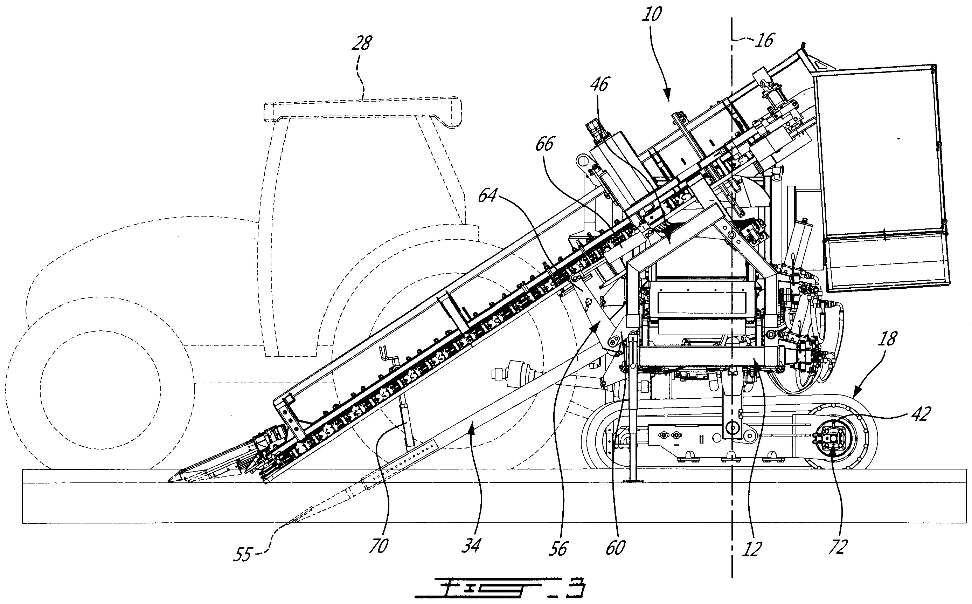

With reference more specifically to Figures 1 and 3, the mounting assembly 56 includes a central bar 58 that fixedly receives both lifting shares 34-36 thereon via their proximate end so that each lifting share 34, 36 is operatively registered with a respective picker 30, 32 thereunder.

The central bar 58 is mounted to the frame 12 via lateral brackets 60 for pivotal movement about the axis 62, which is parallel to axis 14.

The mounting assembly 56 further includes two lateral lever arms 64 that are generally perpendicular to the central bar 58. Each lever arm 64 is pivotably mounted to the frame 12 via a cylinder 66 which further acts as an actuator to pivot the lifting shares 34-36 in unison.

A secondary bar 68 is mounted to both the central bar 58 of the mounting assembly and main bar 52 of the lifting shares 34, 36 so as to be parallel thereto, for solidary movement therewith.

The secondary bar 68 adds rigidity to the lifting share 34, 36 and also receives a coupling element, in the form of an adjustment screw 70, that is also attached to a respective picker 30 or 32 for pivotal movement of the pickers 30-32 and lifting shares 34-36 in unison.

In operation, both cylinders 66 are actuated to raise or lower the pickers 30-32 and lifting shares 34-36 in unison. A selected position of the lifting shares 34-36 relative to the ground 54 allows fixing the penetration depth of the lifting shares 34-36 therein. This selected position is fixed by locking the cylinders 66 in the corresponding position.

The first and second sensors 38 and 40 are coupled to a respective cylinder 66 so as to measure a change of pressure thereon and to generate respective first and second signals indicative thereof. In operation, this change of pressure is indicative of a change of friction/pressure into the lifting shares 34-36.

The third sensor 42 includes a pair of pressure sensors that are coupled respectively to the input and output of the motor 72 of the motorized track 18. The sensor 42 measures the difference between the drive input and its output and generates a third signal indicative thereof. In operation, the third signal is also indicative of a change of friction/pressure into the lifting shares 34-36.

In operation, the harvester 10 is mounted onto the tractor 28 via the three-point hitch assembly 26. The cylinders 66 are then moved to a position that corresponds to a desire depth of the distal end 55 of the lifting shares 34-36 into the ground 54. The tractor 28 then pulls the harvester 10 in a direction that aligns the pickers 30-32 with two adjacent rows 74 of carrots while the moving components of the harvester 10 are energized by the power output of the tractor 28 via the three-point connection thereof. The motorized track 18 also contributes to pushing the harvester 10.

The traction force of the motorized track 18 is set taking into account readings from the sensors 38-42 so as to compensate for any additional pressure/friction on the lifting shares 34-36, resulting in the constant alignment of the harvester 10 relative to the rows 74 of carrots during operation

The harvester 10 further includes other well-known components such as a conveyor 76 under the pickers 30-32 that receives the carrots (not shown) when they are released from the first and second pickers 30-32, an oil tank 78, etc., which are believed to be well-known in the art and which will not be described herein in more detail for concision purposes.

While the harvester 10 has been described as a two-row harvester, it can be modified for three or more rows. According to such an embodiment, the motorized traction assembly 18 is configured and positioned under the frame so as to compensate for the extra load/friction.

It is to be noted that many modifications could be made to the harvester 10 described hereinabove and illustrated in the appended drawings. For example:
- the frame is not limited to the illustrated embodiment and can take other form allowing to support and relatively position the various components of the harvester 10;
- the pickers 30-32 and/or lifting shares 34-36 may take other form than illustrated;
- in addition to the pickers 30-32 and lifting shares 34-36, the harvester 10 may be equipped with more or less components and may have more or less functionalities than those illustrated;
- one or both tracks 18 and 20 may be replaced by a corresponding wheel (not shown);
- other mechanisms than the cylinders 66 may be provided to position the pickers 30-32 and lifting shares 34-36 relative to the ground 54;
- one of i) the pressure sensors 38-40 on the cylinders 66 and ii) sensor 42 on the motorized track 18 may be omitted;
- other types of sensors than pressure sensors on the cylinders 66 and on the track 18 may be used to measure changes of friction on the lifting shares 34-36 as they move in the ground 54;
- the pressure sensors on the cylinders 66 can be omitted and the forward speed of the motorized track 18 can instead be synchronized with that of the tractor 28.

The harvester 10, and more specifically the pickers 30-32, may be adapted to pick other root vegetables than carrots.

Although a tractor-assisted multi-row harvester for root vegetables has been described hereinabove by way of illustrated embodiments thereof, it can be modified. It is therefore to be understood that numerous modifications may be made to the illustrative embodiments being the scope of protection defined by the claims.

## Claims

1. A tractor-assisted multi-row harvester (10) for root vegetables comprising:
a frame (12) having a height and first and second lateral sides (22, 24) defining a width of the frame; the frame further defining a first axis (14) along its width and a second axis (16) along its height; the second axis being perpendicular to the first axis;
a three-point hitch mounting assembly (26) secured to the frame for operatively attaching the multi-row harvester to a tractor (28);
a plurality of generally parallel pickers (30, 32) that are pivotally mounted to the frame on a first lateral side of the three-point hitch mounting assembly along the first axis; the plurality of generally parallel pickers being slanted relative to the second axis;
a plurality of lifting shares (34, 36) mounted to the frame, each under and behind a respective one of the plurality of pickers for solidary pivotal movement therewith;
the tractor-assisted multi-row harvester for root vegetables further comprising:
first and second parallel traction assemblies (18, 20) that are mounted to the frame thereunder for supporting the frame so as to be both operatively oriented perpendicular to both the first and second axes; the first and second traction assemblies being registered with respectively first and second positions along the first axis near the first and second lateral sides of the frame respectively; the first traction assembly being motorized; and
at least one sensor (38, 40) mounted to the frame and coupled to the first traction assembly for generating at least one signal indicative of a pressure on the first and second lifting shares;
wherein, at least one of the plurality of generally parallel pickers being at least partially registered with the first traction assembly; and
the first traction assembly being energized according to the at least one signal to match the pressure on the plurality of lifting shares.

2. The harvester as recited in claim 1, wherein the at least one sensor is mounted to at least one of the plurality of lifting shares so that the at least one signal is indicative of a pressure directly thereon.

3. The harvester as recited in claim 1, wherein the at least one sensor is mounted to the first traction assembly to measure a change of traction thereof.

4. The harvester as recited in claim 3, wherein the first traction assembly includes a motor (72) having an input and an output; the at least one sensor includes a pair of pressure sensors, each coupled to a respective one of the input and output of the motor.

5. The harvester as recited in claim 1, wherein the at least one sensor includes at least one first sensor mounted to at least one of the plurality of lifting shares so as to generate at least one first signal indicative of a pressure directly thereon and a second sensor mounted to the first traction assembly to measure a change of traction thereon and to generate a second signal indicative thereof; the first traction assembly being energized according to both the at least one first signal and the second signal.

6. The harvester as recited in claim 1, wherein at least one of the first and second traction assemblies is an endless track assembly.

7. The harvester as recited in claim 6, wherein the first and second traction assemblies are endless track assemblies.

8. The harvester as recited in claim 1, wherein at least one of the first and second traction assemblies is a motorized wheel.

9. The harvester as recited in claim 1, further comprising a mounting assembly (26) secured to the frame and including a bar (58) that is parallel to the first axis and that fixedly receives the plurality of lifting shares and at least two lever arms (64), each having a first longitudinal end that is fixedly mounted to the bar so as to extend perpendicularly thereto and pivotably mounted to the frame, and a second longitudinal end that is pivotably mounted to the frame via a cylinder (66); the cylinders further acting as actuators to pivot the lifting shares in unison relative to the frame.

10. The harvester as recited in claim 9, wherein the at least one sensor is mounted to one of the cylinders so as to measure a change of pressure thereon.

## Patentansprüche

1. Traktorgestützte mehrreihige Erntemaschine (10) für Wurzelgemüse, die Folgendes umfasst:
einen Rahmen (12) mit einer Höhe und einer ersten und einer zweiten lateralen Seite (22, 24), die eine Breite des Rahmens definieren; wobei der Rahmen ferner eine erste Achse (14) entlang seiner Breite und eine zweite Achse (16) entlang seiner Höhe definiert; wobei die zweite Achse zu der ersten Achse senkrecht ist;
eine Dreipunkt-Anhängemontageanordnung (26), die an dem Rahmen befestigt ist, zum betriebstechnischen Anbringen der mehrreihigen Erntemaschine an einen Traktor (28);
mehrere im Allgemeinen parallele Pflücker (30, 32), die an dem Rahmen auf einer ersten lateralen Seite der Dreipunkt-Anhängemontageanordnung entlang der ersten Achse schwenkbar angebracht sind; wobei die mehreren im Allgemeinen parallelen Pflücker bezüglich der zweiten Achse geneigt sind;
mehrere Hebescharen (34, 36), die jeweils unter und hinter einem jeweiligen der mehreren Pflücker an dem Rahmen für eine gemeinsame Schwenkbewegung mit ihm angebracht sind;
wobei die traktorgestützte mehrreihige Erntemaschine für Wurzelgemüse ferner Folgendes umfasst:
eine erste und eine zweite parallele Traktionsanordnung (18, 20), die an dem Rahmen darunter angebracht sind, zum Tragen des Rahmens, so dass beide sowohl zu der ersten als auch zu der zweiten Achse betriebstechnisch senkrecht orientiert sind; wobei die erste und die zweite Traktionsanordnung bei jeweils einer ersten und einer zweiten Position entlang der ersten Achse in der Nähe der ersten bzw. der zweiten lateralen Seite des Rahmens ausgerichtet sind; wobei die erste Traktionsanordnung motorisiert ist; und
wenigstens einen Sensor (38, 40), der an dem Rahmen angebracht ist und mit der ersten Traktionsanordnung gekoppelt ist, zum Erzeugen wenigstens eines Signals, das einen Druck auf die erste und die zweite Hebeschar angibt;
wobei wenigstens einer der mehreren im Allgemeinen parallelen Pflücker wenigstens teilweise auf die erste Traktionsanordnung ausgerichtet ist; und
wobei die erste Traktionsanordnung gemäß dem wenigstens einen Signal mit Energie versorgt wird, um dem Druck auf die mehreren Hebescharen zu entsprechen.

2. Erntemaschine nach Anspruch 1, wobei der wenigstens eine Sensor an wenigstens einer der mehreren Hebescharen angebracht ist, so dass das wenigstens eine Signal einen Druck direkt auf sie angibt.

3. Erntemaschine nach Anspruch 1, wobei der wenigstens eine Sensor an der ersten Traktionsanordnung angebracht ist, um eine Änderung ihrer Traktion zu messen.

4. Erntemaschine nach Anspruch 3, wobei die erste Traktionsanordnung einen Motor (72) mit einem Eingang und einem Ausgang enthält; der wenigstens eine Sensor ein Paar von Drucksensoren enthält, wobei jeder mit einem jeweiligen des Eingangs und des Ausgangs des Motors gekoppelt sind.

5. Erntemaschine nach Anspruch 1, wobei der wenigstens eine Sensor wenigstens einen ersten Sensor, der an wenigstens einer der mehreren Hebescharen angebracht ist, um wenigstens ein erstes Signal zu erzeugen, das einen Druck direkt auf sie angibt, und einen zweiten Sensor, der an der ersten Traktionsanordnung angebracht ist, um eine Änderung ihrer Traktion zu messen und ein zweites Signal zu erzeugen, das diese angibt, enthält; wobei die erste Traktionsanordnung gemäß sowohl dem wenigstens einen ersten Signal als auch dem zweiten Signal mit Energie versorgt wird.

6. Erntemaschine nach Anspruch 1, wobei wenigstens eine der ersten und der zweiten Traktionsanordnung eine Endloskettenanordnung ist.

7. Erntemaschine nach Anspruch 6, wobei die erste und die zweite Traktionsanordnung Endloskettenanordnungen sind.

8. Erntemaschine nach Anspruch 1, wobei wenigstens eine der ersten und der zweiten Traktionsanordnung ein motorisiertes Rad ist.

9. Erntemaschine nach Anspruch 1, die ferner eine Montageanordnung (26) umfasst, die an dem Rahmen befestigt ist und eine Stange (58), die parallel zu der ersten Achse ist und die die mehreren Hebescharen fest aufnimmt, und wenigstens zwei Hebelarme (64), wobei jeder ein erstes longitudinales Ende, das an der Stange fest angebracht ist, so dass es sich senkrecht zu ihr erstreckt, und schwenkbar an dem Rahmen angebracht ist, und ein zweites longitudinales Ende, das über einen Zylinder (66) schwenkbar am Rahmen angebracht ist, aufweist, enthält; wobei die Zylinder ferner als Aktuatoren wirken, um die Hebescharen im Einklang relativ zum Rahmen zu schwenken.

10. Erntemaschine nach Anspruch 9, wobei der wenigstens eine Sensor an einem der Zylinder angebracht ist, um eine Änderung des Drucks auf ihn zu messen.

## Revendications

1. Machine de récolte à rangées multiples assistée par tracteur (10) pour légumes-racines comprenant :
un châssis (12) présentant une hauteur et des premier et second côtés latéraux (22, 24) définissant une largeur du châssis ; le châssis définissant en outre un premier axe (14) suivant sa largeur et un second axe (16) suivant sa hauteur ; le second axe étant perpendiculaire au premier axe ;
un ensemble de montage d'attelage trois points (26) fixé au châssis pour attacher de manière fonctionnelle la machine de récolte à rangées multiples à un tracteur (28) ;
une pluralité de cueilleuses généralement parallèles (30, 32) qui sont montées pivotantes sur le châssis sur un premier côté latéral de l'ensemble de montage d'attelage trois points le long du premier axe ; la pluralité de cueilleuses généralement parallèles étant inclinées par rapport au second axe ;
une pluralité de socs de levage (34, 36) montés sur le châssis, chacun sous et derrière l'une respective de la pluralité de cueilleuses pour un mouvement de pivotement solidaire avec celle-ci ;
la machine de récolte à rangées multiples assistée par tracteur pour légumes-racines comprenant en outre :
des premier et second ensembles de traction parallèles (18, 20) montés au-dessous du châssis pour supporter le châssis de manière à être tous deux orientés en fonctionnement perpendiculairement aux premier et second axes ; les premier et second ensembles de traction étant alignés respectivement avec des première et seconde positions le long du premier axe, respectivement à proximité des premier et second côtés latéraux du châssis ; le premier ensemble de traction étant motorisé ; et
au moins un capteur (38, 40) monté sur le châssis et accouplé au premier ensemble de traction pour générer au moins un signal indiquant une pression sur les premier et second socs de levage ;
dans lequel au moins l'une de la pluralité de cueilleuses généralement parallèles est au moins partiellement alignée avec le premier ensemble de traction ; et
le premier ensemble de traction est mis sous tension en fonction du ou des signaux pour correspondre à la pression exercée sur la pluralité de socs de levage.

2. Machine de récolte selon la revendication 1, dans laquelle le ou les capteurs sont montés sur au moins l'un de la pluralité de socs de levage de sorte que le ou les signaux indiquent une pression directement sur celui-ci.

3. Machine de récolte selon la revendication 1, dans laquelle le ou les capteurs sont montés sur le premier ensemble de traction pour mesurer un changement de traction de celui-ci.

4. Machine de récolte selon la revendication 3, dans laquelle le premier ensemble de traction comprend un moteur (72) ayant une entrée et une sortie ; le ou les capteurs comprennent une paire de capteurs de pression, chacun étant couplé à l'une respective de l'entrée et de la sortie du moteur.

5. Machine de récolte selon la revendication 1, dans laquelle le ou les capteurs comprennent au moins un premier capteur monté sur au moins l'un de la pluralité de socs de levage de manière à générer au moins un premier signal indiquant une pression directement sur celui-ci et un second capteur monté sur le premier ensemble de traction pour mesurer un changement de traction sur celui-ci et pour générer un second signal indiquant ce changement ; le premier ensemble de traction étant mis sous tension en fonction à la fois du ou des premiers signaux et du second signal.

6. Machine de récolte selon la revendication 1, dans laquelle au moins l'un des premier et second ensembles de traction est un ensemble de rails sans fin.

7. Machine de récolte selon la revendication 6, dans laquelle les premier et second ensembles de traction sont des ensembles de rails sans fin.

8. Machine de récolte selon la revendication 1, dans laquelle au moins l'un des premier et second ensembles de traction est une roue motorisée.

9. Machine de récolte selon la revendication 1, comprenant en outre un ensemble de montage (26) fixé au châssis et comprenant une barre (58) qui est parallèle au premier axe et qui reçoit de manière fixe la pluralité de socs de levage et au moins deux bras de levier (64), chacun ayant une première extrémité longitudinale qui est montée de manière fixe sur la barre de manière à s'étendre perpendiculairement à celle-ci et montée de manière pivotante sur le châssis, et une seconde extrémité longitudinale qui est montée de manière pivotante sur le châssis par l'intermédiaire d'un vérin (66) ; les vérins servant en outre d'actionneurs pour faire pivoter les socs de levage à l'unisson par rapport au châssis.

10. Machine de récolte selon la revendication 9, dans laquelle le ou les capteurs sont montés sur l'un des vérins de manière à mesurer un changement de pression sur celui-ci.
